Europäisches Patentamt

European Patent Office

Office européen des brevets

(11) Publication number: **0 278 761**
**B1**

(12) EUROPEAN PATENT SPECIFICATION

(45) Date of publication of patent specification: **23.01.91**

(51) Int. Cl.⁵: **B 65 G 47/91**

(21) Application number: **88301135.5**

(22) Date of filing: **11.02.88**

(54) Feeder.

(30) Priority: **11.02.87 GB 8703073**

(43) Date of publication of application:
**17.08.88 Bulletin 88/33**

(45) Publication of the grant of the patent:
**23.01.91 Bulletin 91/04**

(84) Designated Contracting States:
**BE DE NL**

(56) References cited:
**US-A-3 386 558**

(73) Proprietor: **ETABLISSEMENT GERSAN
Staedtle 36
FL-9490 Vaduz (LI)**

(72) Inventor: **Leaton, Timothy Howard
55 Gainsborough Drive
Blythewood Ascot Berkshire SL5 8TA (GB)**

(74) Representative: **Lyndon-Stanford, Edward
Willoughby Brooke et al
MARKS & CLERK 57/60 Lincoln's Inn Fields
London WC2A 3LS (GB)**

Courier Press, Leamington Spa, England.

## Description

### Background of the invention

The present invention relates to a feeder for feeding discrete objects one-by-one, comprising a suction nozzle which circulates in a closed path including a pick-up point and a discharge point. Feeders of this type are shown in GB 2 169 885A, GB 2 171 682A and GB 2 171 683A. Such feeders are useful in feeding for instance accelerators such as the belt feeder disclosed in GB 2 167 029A. The objects being fed may be typically gemstones such as diamonds (e.g. having a weight of 2 point to 15 carat, preferably 5 point to 5 carat, where 1 point=0.01 carat and 1 carat=0.2 gm); however, the objects can be any suitable objects, and may for instance be pharmaceutical pills or tablets or even objects as large as agricultural produce such as potatoes.

The general arrangement is that the suction nozzle should pick up from a mass of the objects, usually in a rotating bowl. As the speed of rotation of the bowl is limited, and as the speed of the nozzle at the bowl should be roughly equal to the speed of the bowl, the speed of the nozzle at the bowl is limited. Typical pick-up speeds are 0.3—0.5 m/s for gemstones. However, the feed speed required at the exit from the accelerator is 1 to 3 m/s. In order to achieve this, two independent mechanisms are currently used, the first being the primary feeder for picking the stones from the bowl and the second being the accelerator for accelerating the stones. Thereafter, the stones may be passed through a detector and for instance weighed — handling speeds of 15 stones per second or more can be achieved.

GB 1 019 952 (for ceramic articles), GB—A—2 091 667 (for cigarettes), GB 862 450 (for lamp filaments), GB 843 780, US 3 934 704 (for soap bars), DE—A—2 432 798 (for flat cartons), US 3 552 582 (for semi-conductor wafers), US 3 567 011 (for cigarettes) and US 3 677 419 (for discs) as well as DE—A—2 729 747, DE—A—GM—8 215 096, US 3 386 558, US 4 065 001 and GB—A—2 072 125 also disclose feeders of the general type to which the invention relates.

The preambles of claims 1 and 2 are based on US—A—3 386 558.

### The invention

The invention provides feeders as set forth in claims 1 and 2, and a method as set forth in claim 19. The remaining claims set forth optional features of the invention.

By varying the speed of the suction nozzle as it circulates, the suction nozzle can travel slowly as it picks up and travel fast as it discharges, a ratio of up to e.g. 1:10 being possible, and the primary feeder and accelerator can be combined in a single mechanism.

### Preferred embodiments

The invention will be further described, by way of example, with reference to the accompanying drawing, in which:—

Figure 1 is a side view, partly in vertical section, through a first embodiment of the invention;

Figure 2 is a schematic axial view, showing the path of the suction nozzle in the embodiment of Figure 1;

Figure 3 is a side view, partly in vertical section, through a second embodiment of the invention;

Figures 4 to 7 illustrate third to sixth embodiments of the invention; and

Figures 8 and 9 illustrate alternative ways of utilising the invention.

### Figures 1 and 2

The feeder is for picking up gemstones 1 up from a rotary bowl 2 as described in GB 2 169 885A. The feeder has a constant speed motor 3 whose shaft carries two toothed pulleys 4 which drive by way of toothed belts 5 a main feeder shaft 6 and a rotary valve body 7. The shaft 6 and valve body 7 are carried by a stationary feeder body 8.

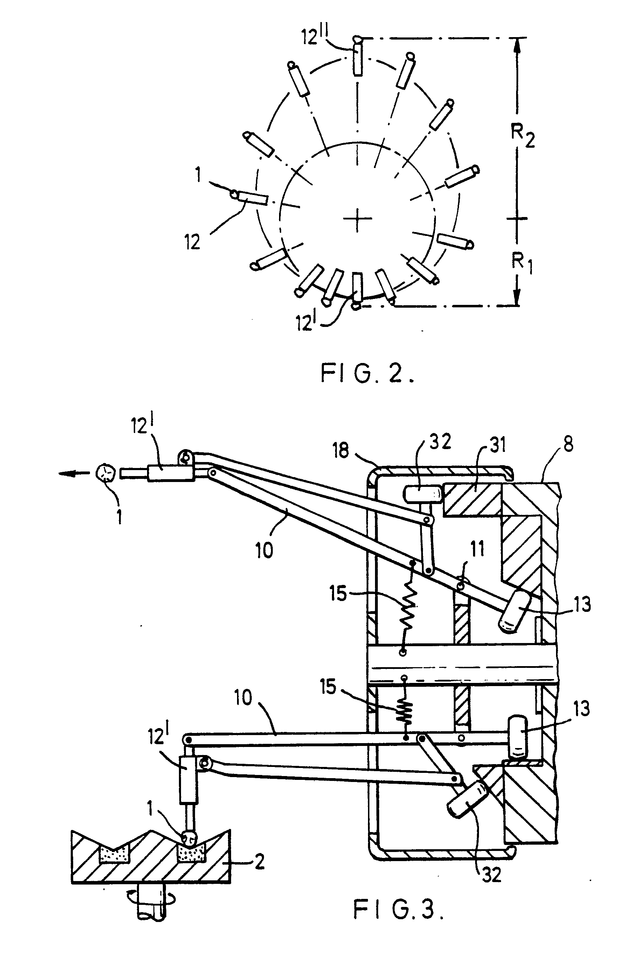

The shaft 6 carries a slotted head or hub 9 to which are pivoted at least four nozzle arms 10, the pivot axes 11 lying in a plane normal to the axis of the hub 9 and being spaced around the axis of the hub 9. A suction nozzle 12 is fixed to the free end of each nozzle arm 10 — nozzle 12' is at the pick-up point and nozzle 12'' is at the discharge point. A rotary cam follower 13 is mounted on the rear end of each nozzle arm 10 and travels around the inside of an annular cam 14, in this way constraining the free end of the nozzle arm 10 to pivot towards the axis of rotation as the arm 10 travels towards the pick-up point (12'), and away from the axis of rotation as the rarm 10 travels towards the discharge point (12'') — see Figure 2. As the speed of the motor 3 is constant, the nozzle 12 will circulate in a closed path at constant angular velocity; however, as the radius of the nozzle 12 changes, the speed of the nozzle 12 will vary as it circulates in such a way that the nozzle 12 is travelling substantially more slowly at the pick-up point (12'), radius $R_1$, that at the discharge point (12''), radius $R_2$. Helical tension springs 15 provide the counter reaction to the cam 14.

The construction of each nozzle 12 is as explained in GB 2 171 682A, with a central suction opening and an annulus of blow-off openings around the central suction opening (not shown). The suction opening is connected to a suction tube 16 and the blow-off openings are connected to a pressure tube 17, the tubes 16, 17 being taken via a face plate 18 (which merely holds the tubes 16, 17 in position) to the valve body 7; the valve body 7 makes sliding contact with a stationary valve body 19 connected to suction and pressure leads 20, 21. The valve body 19 mounts the feeder body 8 in position.

The detailed operation of the suction and pressure can be as described in GB 2 171 682A, but in general terms, suction is applied to the suction nozzle 12 from a point in its path which is at or before the pick-up point (12') and continues to be applied until the nozzle 12 reaches its discharge point, when the suction is broken and the stone 1 is discharged by applying compressed air to the central suction opening (thereby effectively removing the suction so that the stone 1 is released), and also applying compressed air to the blow-off openings around the central suction opening, blowing the stone 1 off. Nonetheless, in some arrangements, it is not necessary to have the blow-off openings, the pressure tube 17 and the pressure lead 21, the valve bodies 7, 19 being modified accordingly.

The path of the nozzles 12 is determined in a simple manner by the profile of the cam 14 and no special drives or software are required. At the discharge point, in the arrangement shown, the nozzle 12 is travelling at 90° to the direction of blow-off. As explained below, the path can be varied as desired.

It is possible to arrange for the hub 9 to be quickly exchangeable for another hub having different nozzles, e.g. to change the nozzle orifice sized for different sizes stones, and/or to change the radius of the cam followers 13, to change the nozzle trajectory; any suitable holding means can be used such as a "Leur" taper, a circlip, magnetic retention or vacuum retention. It can also or alternatively be arranged for the cam 14 to be quickly exchangeable for a cam 14 of a different profile, to change the nozzle trajectory. This makes the feeder very versatile. If desired, the face plate 18 can be integral with the hub 9, or need not be included at all.

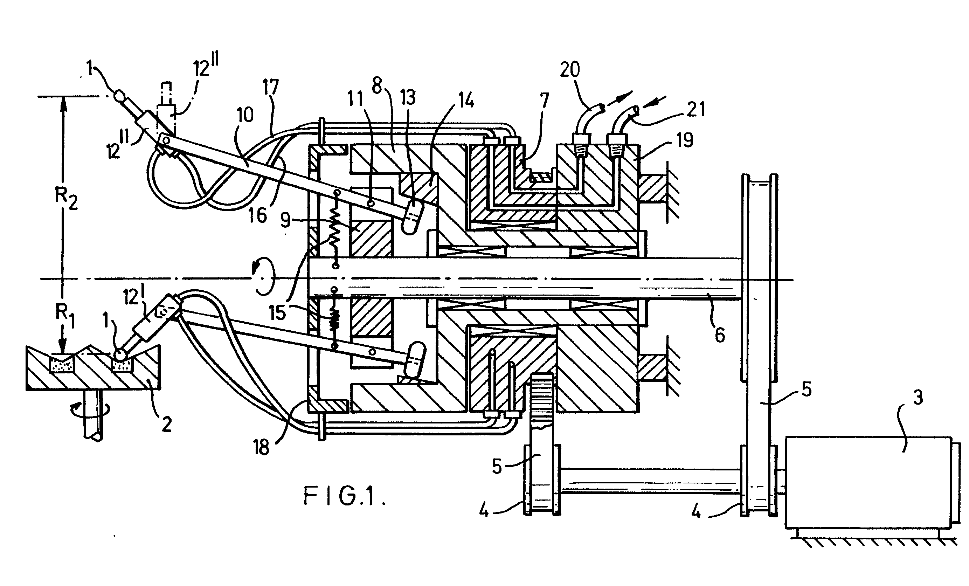

In Figure 1, the angular position of each nozzle 12 is fixed in relation to its arm 10, though the position is adjustable as indicated in chain-dotted lines at 12'' (the position of the bowl 2 would have to be slightly changed).

The feeder can rotate for instance at 60 r.p.m., but there is no fundamental limit on the speed if there is proper counterbalancing.

Figure 3

Figure 3 illustrates a feeder which is similar to that of Figure 1, and similar parts have the same reference. However, in this embodiment, the angle of the nozzle 12 to the arm 10 and the attitude of the nozzle 12 are changed as the nozzle travels from the pick-up point (12') to the discharge point (12''), the nozzle 12 being pivoted to the free end of the nozzle arm 10. The pivotal motion of the nozzle 12 is cam-operated by a fixed (but preferably exchangeable) annular cam 31 which is engaged by (preferably exchangeable) rotary followers 32 moving generally with the respective suction nozzles 12 and operatively connected to the nozzles 12, in this case through pivoted links. In this way, vertical pick-up and horizontal discharge can be arranged, though other arrangements are possible by suitably profiling the cam 31 and suitably arranging the pivoted links connecting the followers 32 to the nozzles 12.

Figure 4

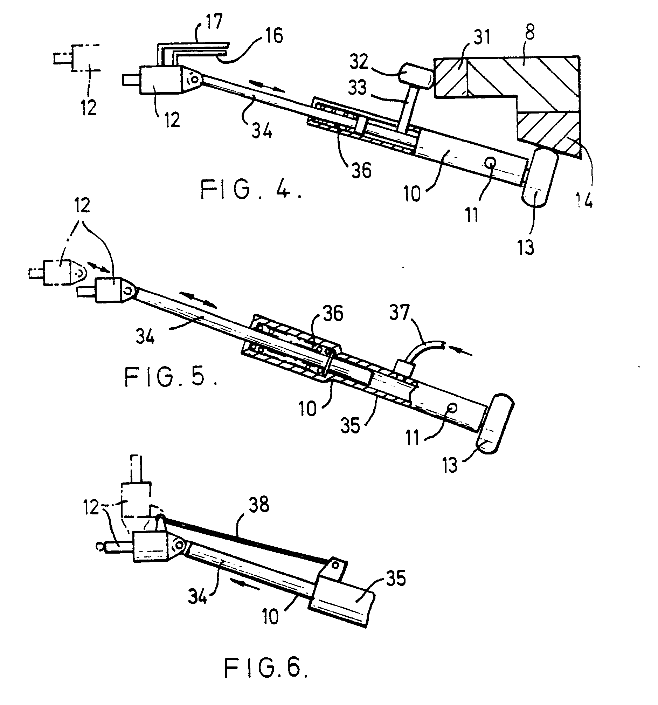

Figure 4 illustrates that the reach of the nozzle arm, 10 can be altered using an arrangement generally similar to that of Figure 3 but with the rotary cam follower 32 carried on a short arm 33 fixed to one part 34 of a telescopic arm 10, the other part 35 being mounted on the hub 9 (not shown). The arm 10 cyclically extends and retracts. The reaction to the cam 31 is provided by a helical compression spring 36.

Figure 5

Figure 5 shows an arrangement similar to Figure 4 where the suction nozzle 12 is carried on an arm 10 which cyclically extends and retracts. In this case, the extension is caused pneumatically, a pressure lead 37 being shown. Suitable valve controls can be incorporated, either on a rotary valve face or electronically actuated.

Figure 6

Figure 6 illustrates that it is possible to combine cyclically varying reach and cyclically varying attitude of the nozzles 12. Figure 6 also illustrates that the angle of the nozzle 12 can be changed by pressure fluid action. In this case, the arrangement of the telescopic arm 10 is as in Figure 5 but the nozzle 12 is freely pivoted to the free end of the arm part 34 and is connected by a pivoted link 38 to the other arm part 35. Mechanical extension of the arm 10 could alternatively be used, as illustrated in Figure 4.

Figure 7

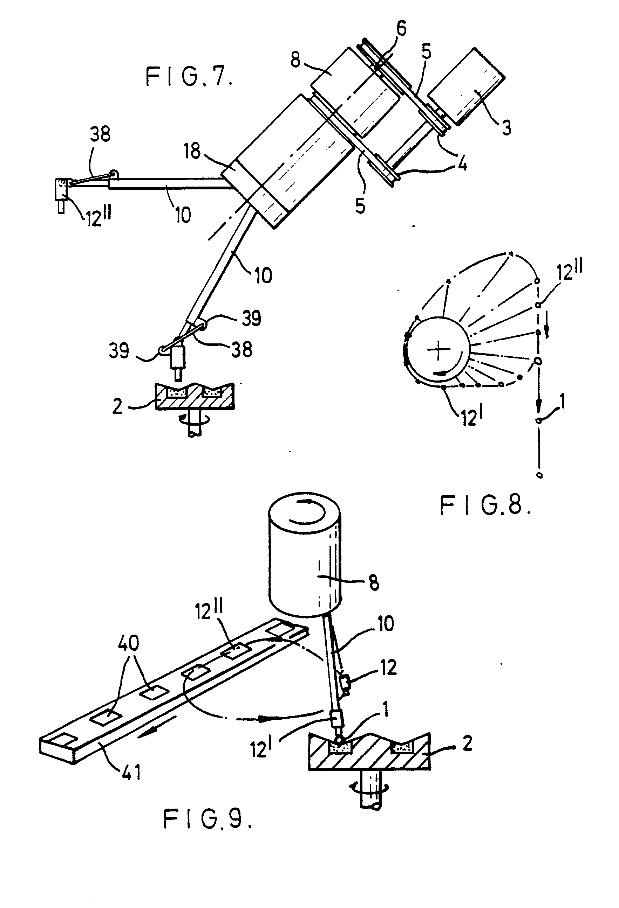

Figure 7 illustrates an arrangement similar to that in Figure 6, but with the link 38 connected between lugs 39 on opposite sides of the axis of the arm 10 when the arm 10 is vertical — this illustrates that the discharge can be at any chosen angle, here vertically downwards. Figure 7 also illustrates that the feeder axis can be chosen as suitable for the arrangement and particular path configuration required for the nozzles 12.

Figures 8 and 9

Figures 8 and 9 illustrate that by e.g. suitably profiling the cam 14, the nozzles 12 can have a rectilinear path in the zone of their discharge point (12''), for better control. In the case of Figure 8, the path is vertically downwards (e.g. for feeding by gravity through detectors) and in the case of Figure 9, the path is horizontal (e.g. for placing the stones 1 in respective cells 40 on a moving conveyor 41).

The pick-up and discharge points can be at the same or different levels.

**Claims**

1. A feeder for feeding discrete objects (1) one-by-one, comprising a suction nozzle (12) which circulates in a closed path, the path including a pick-up point (12') and a discharge point (12''), the speed of the nozzle varying in such a way that the nozzle (12) is travelling substantially more slowly at the pick-up point (12') than at the discharge point (12''), characterised in that the suction nozzle (12) circulates at substantially constant angular velocity about an axis, and in that the distance of the nozzle (12) from the axis varies as it circulates, being substantially greater at the discharge point (12'') than at the pick-up point (12').

2. A feeder for feeding discrete objects (1) one-by-one, comprising a suction nozzle (12) which circulates in a closed path, the path including a pick-up point (12') and a discharge point (12''), the speed of the nozzle (12) varying in such a way that the nozzle (12) is travelling substantially more slowly at the pick-up point (12') than at the discharge point (12''), means (16, 20) for applying suction to the nozzle (12) from a point in its path which is at or before the pick-up point (12'), and means (17, 21) for effectively removing the suction from the nozzle (12) at the discharge point (12''), characterised in that the suction nozzle circulates at substantially constant angular velocity about an axis, and in that the distance of the nozzle (12) from the axis varies as it circulates, being substantially greater at the discharge point (12'') than at the pick-up point (12').

3. The feeder of claim 1 or 2, wherein there is a plurality of the suction nozzles (12).

4. The feeder of any of the preceding claims, wherein the or each suction nozzle (12) is carried on the free end of an arm (10) which is pivotally mounted on a rotary head (9), there being means (13, 14, 15) for constraining the free end of the arm (10) to pivot towards the axis of rotation as the arm travels towards the pick-up point (12') and away from the axis of rotation as the arm (10) travels towards the discharge point (12'').

5. The feeder of claim 4, wherein the constraining means comprises a cam follower (13) on the arm (10), which engages a cam (14).

6. The feeder of claim 6, wherein the cam follower (13) is on the other side of the pivot axis (11) to the free end of the arm (10).

7. The feeder of any of claims 3 to 6, wherein the pivot axis (11) lies in a plane normal to the axis of the rotary head (9), the pivot axis (11) being spaced from the head axis.

8. The feeder of any of the preceding claims, wherein the angle of the nozzle (12) is changed as the nozzle travels from the pick-up point (12') to the discharge point (12'').

9. The feeder of claim 8, wherein the nozzle (12) is pivoted to the free end of an arm (10), to enable the angle of the nozzle (12) to be changed.

10. The feeder of claim 9, wherein the pivotal motion of the nozzle (12) is cam-operated by a fixed cam (31) which is engaged by a follower (32) moving generally with the nozzle (12) and operatively connected to the nozzle (12).

11. The feeder of claim 9, wherein the angle of the nozzle (12) is changed by pressure fluid action.

12. The feeder of claim 11, wherein the arm (10) is in two telescopic parts (34, 35) and the arm (10) cyclically extends and retracts, the nozzle (12) being pivoted to the end of one part (34) of the arm (10), the nozzle (12) being connected by a link (38) to the other part (35) of the arm (10).

13. The feeder of any of claims 1 to 11, wherein the nozzle (12) is carried on an arm (10) which cyclically extends and retracts.

14. The feeder of claim 13, wherein the extension and/or retraction of the arm (10) is cam operated (31, 32).

15. The feeder of claim 13, wherein the extension and/or retraction of the arm (10) is pressure fluid operated (37).

16. The feeder of any of the preceding claims, wherein the nozzle (12) is arranged to have a rectilinear path in the zone of its discharge point (12'').

17. The feeder of any of the preceding claims, and arranged for feeding gemstones (1).

18. The feeder of any of the preceding claims, wherein means are included for changing the trajectory of the suction nozzle (12).

19. A method of feeding gemstones (1) one-by-one, comprising using the feeder of any of the preceding claims.

**Patentansprüche**

1. Zuführvorrichtung zum vereinzelten Zuführen gesonderter Gegenstände (1), mit einer Saugdüse (12), die auf einer eine Beladestelle (12') und eine Entladestelle (12'') einschließenden, geschlossenen Bahn mit sich in solcher Weise ändernder Geschwindigkeit herumgeführt wird, daß sich die Saugdüse (12) im Bereich der Beladestelle (12') wesentliche langsamer als im Bereich der Entladestelle (12'') bewegt, dadurch gekennzeichnet, daß die Saugdüse (12) mit im wesentlichen konstanter Winkelgeschwindigkeit um eine Achse umläuft und daß sich der Abstand der Saugdüse (12) von der Achse beim Umlauf ändert und im Bereich der Entladestelle (12'') wesentlich größer als im Bereich der Beladestelle (12') ist.

2. Zuführvorrichtung zum vereinzelten Zuführen gesonderter Gegenstände (1), mit einer Saugdüse (12), die auf einer eine Beladestelle (12') und eine Entladestelle (12'') einschließenden, geschlossenen Bahn mit sich in solcher Weise ändernder Geschwindigkeit herumgeführt wird, daß sich die Saugdüse (12) im Bereich der Beladestelle (12') wesentlich langsamer als im Bereich der Entladestelle (12'') bewegt, mit einer Vorrichtung (16, 20) zur Beaufschlagung der Saugdüse (12) mit Unterdruck von einem Bahnpunkt, der sich an oder vor der Beladestelle (12') befindet, und mit einer Vorrichtung (17, 21) zur Aufhebung des Unterdrucks in der Düse (12) an der Entladestelle (12''), dadurch gekennzeichnet, daß sie Saugdüse (12) mit im wesentlichen konstanter Winkelgeschwindigkeit um eine Achse umläuft und daß sich der Abstand der Saugdüse (12) von der Achse beim Umlauf ändert und im Bereich der Entladestelle (12'') wesentlich größer als im Bereich der Beladestelle (12') ist.

3. Zuführvorrichtung nach Anspruch 1 oder 2, gekennzeichnet durch eine Mehrzahl von Saugdüsen (12).

4. Zuführvorrichtung nach einem der vorstehenden Ansprüche, dadurch gekennzeichnet, daß jede Saugdüse (12) an freien Ende eines schwenkbar an einem Drehkopf (9) angeordneten Hebels (10) sitzt, daß Führungselemente (13, 14, 15) das freie Ende des Hebels (10) im Sinne einer Verschwenkung gegen die Drehachse, wenn der Hebel sich auf die Beladestelle (12') zubewegt, und im Sinne einer Verschwenkung weg von der Drehachse, wenn der Hebel sich auf die Entladestelle (12'') zubewegt, zwangsweise führen.

5. Zuführvorrichtung nach Anspruch 4, dadurch gekennzeichnet, daß die Zwangsführungselemente eine Profilrolle (13) an dem Hebel (10) umfassen, die in ein Führungsprofil (14) eingreift.

6. Zuführvorrichtung nach Anspruch 5, dadurch gekennzeichnet, daß die Profilrolle (13) sich auf der dem freien Ende des Hebels (10) gegenüberliegenden Seite der Schwenkachse (11) befindet.

7. Zuführvorrichtung nach einem der Ansprüche 3 bis 6, dadurch gekennzeichnet, daß die Schwenkachse (11) in einer Ebene senkrecht zu und im Anstand von der Drehachse des Drehkopfes (9) liegt.

8. Zuführvorrichtung nach einem der vorhergehenden Ansprüche, dadurch gekennzeichnet, daß sich sie Winkelstellung der Saugdüse (12) ändert, wenn sich die Saugdüse (12) von der Beladestelle (12') zu der Entladestelle (12'') bewegt.

9. Zuführvorrichtung nach Anspruch 8, dadurch gekennzeichnet, daß die Saugdüse (12) schwenkbar an freien Ende des Hebels (10) angeordnet ist, damit die Winkelstellung der Saugdüse (12) geändert werden kann.

10. Zuführvorrichtung nach Anspruch 9, dadurch gekennzeichnet, daß die Schwenkbewegung der Saugdüse (12) durch ein Festprofil (31) nockengesteuert ist, mit dem eine Nachlaufrolle (32) in Eingriff ist, die sich im wesentlichen zusammen mit der Saugdüse (12) bewegt und wirkungsmäßig mit derselben gekoppelt ist.

11. Zuführvorrichtung nach Anspruch 9, dadurch gekennzeichnet, daß die Winkelstellung der Saugdüse (12) durch Druckmittelwirkung veränderbar ist.

12. Zuführvorrichtung nach Anspruch 11, dadurch gekennzeichnet, daß der Arm (10) zwei teleskopartig verschiebbare Teile (34, 35) umfaßt und zyklisch ausschiebbar und zurückziehbar ist, daß die Saugdüse (12) an Ende eines Teils (34) des Armes (10) angeordnet ist und durch ein Koppelelement (38) mit dem anderen Teil (35) des Armes (10) verbunden ist.

13. Zuführvorrichtung nach einem der Ansprüche 1 bis 11, dadurch gekennzeichnet, daß die Saugdüse (12) an einem Arm (10) sitzt, der Zyklisch ausschiebbar und zurückziehbar ist.

14. Zuführvorrichtung nach Anspruch 13, dadurch gekennzeichnet, daß das Ausschieben und/oder das Zurückziehen des Armes (10) durch eine Profilanordnung (31, 32) gesteuert ist.

15. Zuführvorrichtung nach Anspruch 13, dadurch gekennzeichnet, daß das Ausschieben und/oder das Zurückziehen des Armes (10) durch eine Druckmitteleinrichtung (37) betätigbar ist.

16. Zuführvorrichtung nach einem der vorstehenden Ansprüche, dadurch gekennzeichnet, daß die Saugdüse (12) so ausgelegt ist, daß sie im Bereich der Entladestelle (12'') einen geradlinigen Bahnabschnitt aufweist.

17. Zuführvorrichtung nach einem der vorstehenden Ansprüche, dadurch gekennzeichnet, daß die Zuführvorrichtung zur Zuführung von Edelsteinen (1) bzw. Schmucksteinen eingerichtet ist.

18. Zuführvorrichtung nach einem der vorstehenden Ansprüche, gekennzeichnet durch eine Einrichtung zur Änderung der Bewegungsbahn der Saugdüse (12).

19. Verfahren zum vereinzelten Zuführen von Edelsteinen (1) unter Verwendung der Zuführvorrichtung nach einem der vorstehenden Ansprüche.

**Revendications**

1. Dispositif d'alimentation destiné à l'alimentation d'objets distincts (1) un à un, comprenant une buse d'aspiration (12) qui circule suivant un parcours fermé, ce parcours comprenant un point de ramassage (12') et un point de décharge (12''), la vitesse de la buse variant de manière telle que cette buse (12) se déplace sensiblement plus lentement au point de ramassage (12') qu'au point de décharge (12''), caractérisé en ce que la buse d'aspiration (12) circule à une vitesse angulaire essentiellement constante autour d'un axe, et en ce que la distance de la buse (12) par rapport a cet axe varie au cours de la circulation, en étant sensiblement supérieure au point de décharge (12'') qu'au point de ramassage (12').

2. Dispositif d'alimentation destiné à l'alimentation d'objets distincts (1) un par un, comprenant une buse d'aspiration (1) qui circule suivant un parcours fermé, ce parcours comprenant un point de ramassage (12') et un point de décharge (12''), la vitesse de cette buse (12) variant de manière telle qu'elle circule sensiblement plus lentement au point de ramassage (12') qu'au point de décharge (12''), des moyens (16, 20) destinés à l'application d'une aspiration à la buse (12) en un point de son parcours qui se situe au point de ramassage (12') ou avant celui-ci, et des moyens (17, 21) destinés à supprimer l'aspiration de façon efficace de la buse (12) au point de décharge (12''), caractérisé en ce que la buse d'aspiration circule à une vitesse essentiellement constante autour d'un axe, et en ce que la distance de cette buse (12) par rapport à cet axe varie au cours de la circulation, en étant sensiblement supérieure au point de décharge (12'') qu'au point de ramassage (12').

3. Dispositif d'alimentation suivant le revendication 1 ou 2, caractérisé en ce qu'il comporte plusiers buses d'aspiration (12).

4. Dispositif d'alimentaion suivant l'une quelconque des revendications précédentes, caractérisé en ce que la ou chaque buse d'aspiration (12) est supportée à l'extrémité libre d'un bras (10) qui est monté à pivotement sur une tête rotative (9), des moyens (13, 14. 15) étant prévus pour contraindre l'extrémité libre du bras (10) à pivoter vers l'axe de rotation lorsque ce bras se déplace vers le point de ramassage (12') et à l'écart de cet axe de rotation lorsque le bras (10) se déplace vers le point de décharge (12'').

5. Dispositif d'alimentation suivant la revendication 4, caractérisé en ce que les moyens de contrainte comprennent un galet de came (13) prévu sur l'arbre (10), ce galet coopérant avec une came (14).

6. Dispositif d'alimentation suivant la revendication 5, caractérisé en ce que le galet de came (13) se trouve de l'autre côté de l'axe de pivotement (11) par rapport à l'extrémité libre de l'arbre (10).

7. Dispositif d'alimentation suivant l'une quelconque des revendications 3 à 6, caractérisé en ce que l'axe de pivotement (11) se situe dans un plan perpendiculaire à l'axe de la tête rotative (9), cet axe de pivotement (11) étant prévu à l'écart de l'axe de la tête.

8. Dispositif d'alimentation suivant l'une quelconque des revendications précédentes, caractérisé en ce que l'angle de la buse (12) est modifié au fur et à mesure que cette buse se déplace depuis le point de ramassage (12') vers le point de décharge (12'').

9. Dispositif d'alimentation suivant le revendication 8, caractérisé en ce que le buse (12) est montée à pivotement sur l'extrémité libre d'un arbre (10) pour permettre une modification de l'angle de cette buse (12).

10. Dispositif d'alimentation suivant la revendication 9, caractérisé en ce que le mouvement de pivotement de la buse (12) est commandé par une came fixe (31) qui reçoit le contact d'un galet de came (32) se déplaçant d'une façon générale avec la buse (12) et relié à celle-ci pour le fonctionnement.

11. Dispositif d'alimentation suivant la revendication 9, caractérisé en ce que l'angle de la buse (12) est modifié par l'action d'un fluide sous pression.

12. Dispositif d'alimentation suivant la revendication 11, caractérisé en ce que le bras (10) est constitué de deux parties téléscopiques (34, 35) et en ce que ce bras (10) se met cycliquement en extension et en rétraction, la buse (12) étant montée à pivotement à l'extrémité d'une partie (34) du bras (10), la buse (12) étant reliée par une tringle (38) à l'autre partie (34) du bras (10).

13. Dispositif d'alimentation suivant l'une quelconque des revendications 1 à 11, caractérisé en ce que la buse (12) est supportée par un bras (10) qui est amené cycliquement à se mettre en extension et en rétraction.

14. Dispositif d'alimentation suivant la revendication 13, caractérise en ce que l'extension et/ou la rétraction du bras (10) sont commandées par came (31, 32).

15. Dispositif d'alimentation suivant la revendication 13, caractérisé en ce que l'extension et/ou la rétraction du bras (10) sont commandées par un fluides sous pression (37).

16. Dispositif d'alimentation suivant l'une quelconque des revendications précédentes, caractérisé en ce que la buse (12) est agencée de manière à avoir un parcours rectiligne dans la zone de son point de décharge (12'').

17. Dispositif d'alimentation suivant l'une quelconque des revendications précédentes, agencé pour l'alimentation de pierres précieuses (1).

18. Dispositif d'alimentation suivant l'une quelconque des revendications précédentes, caractérisé en ce que des moyens sont prévus pour modifier le trajectoire de la buse d'aspiration (12).

19. Procédé d'alimentation de pierres précieuses (1) une par une, caractérisé en ce qu'il comprend l'utilisation du dispositif d'alimentation suivant l'une quelconque des revendications précédentes.

FIG.1.

EP 0 278 761 B1

FIG. 2.

FIG.3.

FIG. 4.

FIG. 5.

FIG.6.

FIG.7.

FIG.8.

FIG.9.